# EUROPÄISCHE PATENTSCHRIFT

(11) **EP 2 121 238 B1**
(45) Veröffentlichungstag und Bekanntmachung des Hinweises auf die Patenterteilung: **16.06.2010**
(21) Anmeldenummer: 07818886.9
(22) Anmeldetag: 10.10.2007
(51) Int. Cl.: B23Q 1/38, B23Q 1/70, B23Q 5/027, B23Q 5/04

(54) **HOCHDREHZAHLSPINDEL**
HIGH-SPEED SPINDLE
BROCHE À GRANDE VITESSE DE ROTATION

(30) Priorität: 30.11.2006 DE 102006056634
(43) Veröffentlichungstag der Anmeldung: 25.11.2009
(73) Patentinhaber: Aerolas Gmbh, 82008 Unterhaching (DE)
(72) Erfinder: MUTH, Michael, 81737 München (DE)
(74) Vertreter: Schlimme, Wolfram
(86) Internationale Anmeldenummer: PCT/EP2007/008814
(87) Internationale Veröffentlichungsnummer: WO 2008/064736

(56) Entgegenhaltungen:
- EP-A- 0 362 781
- DE-A1- 10 210 750
- GB-A- 2 391 498

## Beschreibung

Die Erfindung betrifft eine Hochdrehzahlspindel nach dem Oberbegriff des Patentanspruchs 1.

Üblicherweise werden beim Bohren von Leiterplatten luftgelagerte Spindeln mit sehr hohen Drehzahlen eingesetzt, die im Bereich von 120.000 l/min bis 350.000 l/min liegen. Die bekannten Spindeln sind in sich geschlossene Funktionseinheiten mit integriertem Drehantriebsmotor, Spannsystem für ein Werkzeug und Kühlung. Eine derartige Spindel ist beispielsweise aus der DE 102 10 750 A1 bekannt. Zum Bohren von Löchern in eine Leiterplatte wird die Spindel auf eine vertikale Vorschubeinrichtung einer Leiterplattenbohrmaschine montiert, die den Bohrvorschub, der üblicherweise kleiner als 15 mm ist, durchführt. Die Vorschubeinrichtung weist einen Linearantrieb, beispielsweise einen Spindel-Mutter-Antrieb oder einen wälzgelagerten Linearmotor, auf.

Da bei dieser bekannten Vorrichtung die gesamte Spindel zum Bohren verfahren werden muß und da üblicherweise eine hohe Anzahl von Bohrungen pro Zeiteinheit durchzuführen ist, treten aufgrund der Masse der zu verfahrenden Spindel beim Auf- und Abbewegen der Spindel zum Bohren hohe Beschleunigungskräfte auf. Diese hohen Beschleunigungskräfte bilden jedoch eine Beschränkung für die Arbeitsgeschwindigkeit, so daß dadurch die erzielbare Leistung beim Bohren von Platinen begrenzt wird. Die große zu bewegende Masse führt außerdem dazu, daß leistungsstarke Axialantriebe erforderlich sind, wodurch die Herstellkosten sehr hoch sind.

Aufgabe der vorliegenden Erfindung ist es, eine gattungsgemäße Hochdrehzahlspindel so auszugestalten, dass sie in der Lage ist, auch bei sehr hohen Drehzahlen eine hohe Bearbeitungsleistung, beispielsweise beim Bohren von Leiterplatten, zu erzielen.

Diese Aufgabe wird durch die im kennzeichnenden Teil des Patentanspruchs 1 angegebenen Merkmale gelöst.

Durch die Anordnung der Werkzeugaufnahmewelle axial im Inneren der Spindelwelle und durch die drehfeste, aber relativ zueinander axialverschiebbare Kopplung dieser beiden Wellen ist es möglich, dass die in Axialrichtung reziprozierend zu bewegende Masse gegenüber dem Stand der Technik deutlich reduziert ist, weil nicht die gesamte Spindel bewegt werden muß, sondern nur die Werkzeugaufnahme mit deren Werkzeugaufnahmewelle. Der hierfür erforderliche Translationsantrieb kann also wesentlich kleiner dimensioniert werden, wodurch die Herstellkosten reduziert werden und die gesamte Masse einer Hochdrehzahlspindel mit ihrem Translationsantrieb gegenüber dem Stand der Technik deutlich reduziert ist.

Durch diese erfindungsgemäße Ausgestaltung wird auch gewährleistet, dass die Spindelwelle auf ein Maß (Längen/Durchmesser-Verhältnis) begrenzt werden kann, welches das Auftreten des sogenannten Halbfrequenzwirbels innerhalb des angestrebten Drehzahlbandes von bis zu 400.000 l/min verhindert. Dies wird dadurch erzielt, dass der Translationsantrieb auf die Werkzeugaufnahmewelle wirkt, und nicht, wie beim Stand der Technik, auf die Spindelwelle; die Spindelwelle kann also unabhängig von der Lage und Ausführungsform des Linearantriebs optimal dimensioniert werden.

Die Übertragung der Dreh- und Linearbewegung erfolgt bei der erfindungsgemäßen Hochdrehzahlspindel somit direkt auf die Werkzeugaufnahme und damit auf das in der Werkzeugaufnahme eingespannte Werkzeug. Der Drehantrieb kann wie bei einer herkömmlichen Hochdrehzahlspindel aufgebaut sein und über eine radial und axial geführte Spindelwelle verfügen, die über einen Synchronmotor oder einen Asynchronmotor elektrisch angetrieben wird. Die Länge, der Durchmesser und die Eigenfrequenzen der Spindelwelle können folglich genau auf die angestrebte Maximaldrehzahl abgestimmt sein, ohne dass andere Konstruktionsparameter (wie beispielsweise die Anbindung an den Translationsantrieb) auf die Länge der Spindelwelle Einfluß nehmen.

Vorteilhaft bei dieser erfindungsgemäßen Ausgestaltung der Hochdrehzahlspindel ist, dass der Linearantrieb nur eine sehr geringe Masse bewegen muß, daher nur wenig Leistung aufbringen muß und somit wesentlich kleiner ausgebildet sein kann, als ein Translationsantrieb für eine herkömmliche Hochdrehzahlspindel. Außerdem ist es nicht erforderlich, die Spindelwelle aus speziellen, hochfesten Materialien herzustellen.

Vorteilhaft ist insbesondere, wenn zur drehfesten Kopplung der Werkzeugaufnahmewelle mit der Spindelwelle eine Drehmitnahmekupplung vorgesehen ist, die mit der Spindelwelle verbunden ist und die eine Axialbohrung aufweist, durch welche die Werkzeugaufnahmewelle hindurchgeführt ist, wobei die Werkzeugaufnahmewelle im Bereich der Drehmitnahmekupplung mit einer Längsprofilierung versehen ist, in die ein entsprechend ausgestalteter Profilkörper der Drehmitnahmekupplung eingreift. Diese Ausführungsform gestattet eine problemlose relative Axialbewegung bei zuverlässiger Drehmomentübertragung.

Insbesondere vorteilhaft ist dabei, wenn der Profilkörper der Drehmitnahmekupplung von zumindest einer Kugel gebildet ist und die Längsprofilierung der Werkzeugaufnahmewelle von zumindest einer achsparallelen Längsnut gebildet ist, in welche zumindest eine Kugel eingreift, die in einer Kugelpfanne gelagert ist, die in der Innenumfangswand der Drehmitnahmekupplung ausgebildet ist. Durch das Vorsehen von einer oder mehreren Kugeln als in die Längsprofilierung eingreifende Profilkörper wird eine reibungsarme Axialbewegung bei zuverlässiger Drehmomentübertragung erzielt.

Alternativ können der Profilkörper der Drehmitnahmekupplung und die Längsprofilierung der Werkzeugaufnahmewelle aber auch von einer herkömmlichen Wellen-Naben-Verbindung, insbesondere von einer Vielzahnprofilverbindung, gebildet sein.

Vorzugsweise ist der Translationsantrieb von einem Linearantrieb gebildet, der über eine Axialkupplung mit der Werkzeugaufnahmewelle axial gekoppelt ist und der über ein ebenes, in Axialrichtung wirkendes Luftlager bezüglich der Werkzeugaufnahmewelle drehentkoppelt ist. Diese Drehentkopplung mittels eines Luftlagers sorgt für eine zuverlässige Übertragung einer Axialkraft bei bezüglich der Drehmomententkopplung besonders reibungsarmer Anbindung des Linearantriebs an die Werkzeugaufnahmewelle. Der Linearantrieb kann dabei beispielsweise von einem Linearmotor oder einem herkömmlichen Schrauben-Muttern-Antrieb gebildet sein.

Besonders bevorzugt wird dabei, wenn die Axialkupplung zwischen dem Translationsantrieb und der Werkzeugaufnahmewelle einen Magneten aufweist, so dass die axiale Kopplung mittels Magnetkraft erfolgt.

Die Erfindung wird nachfolgend anhand eines Beispiels unter Bezugnahme auf die Zeichnung näher erläutert; in dieser zeigt:
- **Fig. 1**: einen Längsschnitt durch eine erfindungsgemäße Hochdrehzahlspindel;
- **Fig. 2**: einen vergrößerten Querschnitt entlang der Linie II-II in Fig. 1; und
- **Fig. 3**: eine vergrößerte Darstellung einer alternativen Drehmitnahmekupplung entlang des Schnitts III-III in Fig. 1.

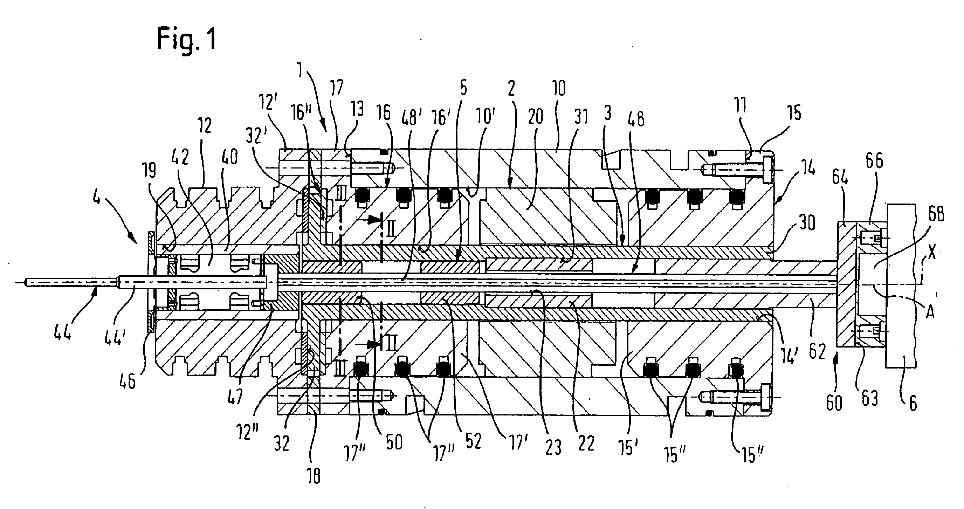

Fig. 1 zeigt eine erfindungsgemäße Hochdrehzahlspindel mit einem im wesentlichen zylindrischen Spindelgehäuse 1. Das Spindelgehäuse 1 weist einen rohrförmigen Gehäusemantel 10 und einen Werkzeugkopf 12 auf, der mit dem rohrförmigen Gehäusemantel 10 verbunden ist.

An einem nachfolgend als Rückseite der Spindel bezeichneten stirnseitigen Ende 11 des rohrförmigen Gehäusemantels 10 ist in den rohrförmigen Gehäusemantel 10 eine erste zylindrische Luftlagereinheit 14 eingesetzt, die einen stirnseitigen flanschartigen Erweiterungsabschnitt 15 aufweist, der gegen die rückwärtige Stirnseite des rohrförmigen Gehäusemantels 10 anliegt und mit diesem verschraubt ist. Der in den rohrförmigen Gehäusemantel 10 eingreifende zylindrische Abschnitt 15' der ersten zylindrischen Luftlagereinheit ist gegenüber der Innenumfangswand 10' des rohrförmigen Gehäusemantels 10 mit Dichtringen 15" abgedichtet.

Die erste zylindrische Luftlagereinheit 14 besitzt eine zur Mittelachse A des rohrförmigen Gehäusemantels 10 koaxiale Durchgangsbohrung 14'.

Am anderen stirnseitigen Ende 13 des rohrförmigen Gehäusemantels 10, das nachfolgend als vorderes Ende bezeichnet wird, ist eine zweite zylindrische Luftlagereinheit 16 in den rohrförmigen Gehäusemantel 10 eingesetzt. Auch diese zweite zylindrische Luftlagereinheit 16 weist an ihrer Stirnseite einen Flanschabschnitt 17 auf, der gegen die Stirnseite des vorderen Endes 13 des rohrförmigen Gehäusemantels 10 anliegt und mit diesem verschraubt ist. Auch die zweite zylindrische Luftlagereinheit 16 ist an ihrem Außenumfang des in den rohrförmigen Gehäusemantels 10 eingreifenden zylindrischen Abschnitts 17' mit Dichtringen 17" versehen, die gegen die Innenumfangswand 10' des rohrförmigen Gehäusemantels 10 anliegen. Die zweite zylindrische Luftlagereinheit 16 ist ebenfalls mit einer axialen Durchgangsbohrung 16' versehen, die koaxial zur Längsachse A des rohrförmigen Gehäusemantels 10 verläuft.

An ihrer freien Stirnseite ist die zweite Luftlagereinheit 16 mit einem sich radial erstreckenden Luftlagerabschnitt 16" versehen.

Die im Inneren des rohrförmigen Gehäusemantels 10 gelegenen stirnseitigen Enden der ersten Luftlagereinheit 14 und der zweiten Luftlagereinheit 16 sind voneinander beabstandet und bilden einen Zwischenraum, in welchem der Stator 20 eines elektrischen Rotationsantriebsmotors 2 angeordnet ist. Der Stator 20 ist in Form eines zylindrischen Rings ausgebildet, dessen zentrale Durchgangsöffnung koaxial zur Achse A des rohrförmigen Gehäusemantels 10 liegt und deren Durchmesser geringfügig größer ist als der Durchmesser der Durchgangsbohrungen 14' und 16'.

Die Durchgangsbohrung 14' der ersten zylindrischen Luftlagereinheit 14 und die Durchgangsbohrung 16' der zweiten zylindrischen Luftlagereinheit 16 bilden jeweils ein radiales aerostatisches Lager, das nachfolgend auch als Luftlager bezeichnet wird. Die jeweilige Innenumfangswand der ersten Luftlagereinheit 14 und der zweiten Luftlagereinheit 16 sind dazu mit Mikrolöchern versehen, die in im Inneren der jeweiligen Luftlagereinheit 14, 16 vorgesehene Druckluftkanäle münden. Derartige aerostatische Lager sind beispielsweise aus der DE 94 21 536 U1 bekannt, deren Beschreibung der Luftlager in den Offenbarungsgehalt dieser Beschreibung einbezogen wird.

Eine rohrförmige Spindelwelle 3, deren Außendurchmesser geringfügig geringer ist, als der Innendurchmesser der Durchgangsbohrungen 14' und 16', ist in die Durchgangsbohrungen 14' und 16' der ersten zylindrischen Luftlagereinheit 14 beziehungsweise der zweiten zylindrischen Luftlagereinheit 16 eingesetzt, so dass die rohrförmige Spindelwelle 3 innerhalb der beiden Luftlagereinheiten 14, 16 aerostatisch gelagert ist.

An ihrem vorderen Endabschnitt ist die rohrförmige Spindelwelle 3 mit einem sich vom rohrförmigen Abschnitt 30 der Spindelwelle 3 radial nach außen erstreckenden Flanschabschnitt 32 versehen. Der radiale Flanschabschnitt 32 ist auf seiner der zweiten Luftlagereinheit 16 zugewandten rückwärtigen Stirnfläche 32' mit geringem Abstand zu dem sich radial erstreckenden Luftlagerabschnitt 16" der zweiten Luftlagereinheit 16 derart angeordnet, dass der sich radial erstreckende Luftlagerabschnitt 16" ein axial wirkendes aerostatisches Lager für die Spindelwelle 3 bildet. Im Inneren des Rohrabschnitts 30 der Spindelwelle 3 ist, radial innerhalb des Stators 20 gelegen, ein zylindrischer Rotor 22 des elektrischen Rotationsantriebsmotors 2 vorgesehen, der drehfest mit der Spindelwelle 3 verbunden ist. Der Rotor 22 ist mit einer zentralen Durchgangsbohrung 23 versehen, die koaxial zur Längsachse A verläuft. Auf diese Weise bilden der Stator 20 und der Rotor 22 den elektrischen Rotationsantriebsmotor 2, mit welchem die in den aerostatischen Lagern der ersten und zweiten Luftlagereinheit 14, 16 rotationsgelagerte Spindelwelle 3 in Drehung versetzbar ist.

Zwischen dem Flanschabschnitt 12' des Werkzeugkopfs 12 und dem Flanschabschnitt 17 der zweiten Luftlagereinheit 16 ist ein Distanzring 18 vorgesehen, dessen Dicke in Axialrichtung etwas größer ist, als die Dicke des radialen Flanschabschnitts 32 der Spindelwelle 3. Hierdurch wird gewährleistet, dass sich nach dem Zusammenbau der Hochdrehzahlspindel, bei dem der rohrförmige Gehäusemantel 10, der Flanschabschnitt 17 der zweiten Luftlagereinheit 16, der Distanzring 18 und der Flanschabschnitt 12' des Werkzeugkopfs 12 aneinandergefügt und in Axialrichtung miteinander verschraubt werden, zwischen dem sich radial erstreckenden Luftlagerabschnitt 16" der zweiten Luftlagereinheit 16 und einem auf der rückwärtigen Stirnseite des Werkzeugkopfs 12 vorgesehenen, sich radial erstreckenden Luftlagerabschnitt 12" ein Axialabstand gebildet ist, der eine freie Rotation der Spindelwelle 3 zuläßt. Die Spindelwelle 3 ist dabei durch die beiden sich radial erstreckenden Luftlagerabschnitte 12" und 16" in Axialrichtung festgelegt.

Der Werkzeugkopf 12 weist eine durchgehende Axialbohrung 19 auf, die ebenfalls mit einer Vielzahl von Mikrolöchern als Luftaustrittsdüsen versehen ist, die mit einem (nicht gezeigten) Druckluftversorgungssystem im Werkzeugkopf 12 verbunden sind, sodaß die Innenumfangsfläche der durchgehenden Axialbohrung 19 eine Lagerfläche eines aerostatischen Lagers für eine in die durchgehende Axialbohrung eingesetzte Spannfutterhülse 40 eines Spannfuttereinsatzes 4 bildet. Auf diese Weise ist die Spannfutterhülse 40 in der durchgehenden Axialbohrung 19 des Werkzeugkopfs 12 drehbar und axial verschiebbar gelagert.

Im Inneren der Spannfutterhülse 40 ist ein Spannfutter 42 vorgesehen, das mit der Spannfutterhülse 40 drehfest verbunden ist und das dem aus der DE 10 2005 003 701 A1 bekannten Spannfutter entspricht. Die Offenbarung der DE 10 2005 003 701 A1 wird bezüglich der Beschreibung des Spannfutters ausdrücklich in die vorliegende Beschreibung einbezogen.

In das Spannfutter 42 ist ein Rotationswerkzeug 44, beispielsweise ein Bohrer, mit seinem Bohrerschaft 44' eingesetzt. Ein an der freien Stirnseite des Werkzeugkopfs 12 vorgesehener ringförmiger Zugmechanismus 46 dient zum Öffnen des Spannfutters und wird betätigt, um das Rotationswerkzeug 44 in das Spannfutter 42 einzusetzen oder aus diesem zu entnehmen.

In das vom (in Fig. 1 linken) freien Ende der Spannfutterhülse 40 abgewandte, im Inneren des Spindelgehäuses 1 gelegene Ende der rohrförmigen Spannfutterhülse 40 ist ein Befestigungseinsatz 47 eingesetzt und mit der Spannfutterhülse 40 drehfest verbunden. An diesem Befestigungseinsatz 47 ist eine Werkzeugaufnahmewelle 48 drehfest angebracht, die sich vom Befestigungseinsatz 47 der Spannfutterhülse 40 zentral in Axialrichtung durch die rohrförmige Spindelwelle 3 hindurch erstreckt und am rückwärtigen Ende der rohrförmigen Spindelwelle aus dieser austritt. Die Werkzeugaufnahmewelle 48 ist dabei koaxial zur Längsachse A gelegen, sodaß die Längsachse A des rohrförmigen Gehäusemantels 10 und die gemeinsamte Rotationsachse X der rotierenden Spindelwelle 3 und der Werkzeugaufnahmewelle 48 identisch sind.

Am rückwärtigen Ende (in Fig. 1 rechts) ist die Werkzeugaufnahmewelle 48 in einen rohrförmigen Abschnitt 62 einer Axialkupplung 60 eingesetzt, der teilweise in die Durchgangsbohrung 31 des Rohrabschnitts 30 der Spindelwelle 3 eingesetzt ist. Der rohrförmige Abschnitt 62 der Axialkupplung 60 ist innerhalb des Rohrabschnitts 30, vorzugsweise mittels eines Luftlagers, axial verschiebbar gelagert. Am freien Ende des rohrförmigen Abschnitts 62 der Axialkupplung 60 ist eine radiale Stirnplatte 64 vorgesehen, die mit dem rohrförmigen Abschnitt 62 verbunden ist. Auf der vom rohrförmigen Abschnitt 62 abgewandten Stirnfläche 63 der radialen Stirnplatte 64 ist ein weiteres aerostatisches Lager vorgesehen, das zur axialen Lagerung eines Kupplungsabschnitts 66 eines Translationsantriebs 6 dient.

Auf diese Weise kann der Translationsantrieb, der sich in Richtung der Rotationsachse X hin und her bewegen kann, die Axialkupplung 60 und mit ihr die Werkzeugaufnahmewelle 48 mit dem Spannfuttereinsatz 4 in Richtung der Achse X (in Fig. 1 nach links) drücken. Für die Übertragung der Zugbewegung (in Fig. 1 nach rechts) ist im Kupplungsabschnitt 66 ein Magnet 68 vorgesehen, der die aus einem geeigneten magnetisierbaren Material bestehende radiale Stirnplatte 64 und mit ihr die Werkzeugaufnahmewelle 48 mit dem Spannfuttereinsatz 4 zurückzieht, wenn sich der Translationsantrieb 6 in Fig. 1 nach rechts bewegt.

Im Inneren des Rohrabschnitts 30 der Spindelwelle 3 ist eine Drehmitnahmekupplung 5 vorgesehen, die zum Beispiel ein oder zwei zylindrische, im Querschnitt ringförmige Kupplungselemente 50, 52 aufweist, die an ihrem Außenumfang mit dem Innenumfang des Rohrabschnitts 30 in Berührung stehen und die mit diesem drehfest verbunden sind. Die Kupplungselemente 50, 52 sind jeweils mit einer axialen Durchgangsöffnung versehen, wobei die jeweilige Durchgangsöffnung an ihrem Innenumfang mit zumindest einer Längsnut, vorzugsweise aber mit mehreren in Umfangsrichtung voneinander beabstandeten Längsnuten versehen ist und so einen Profilkörper der Drehmitnahmekupplung 5 bildet. Der Außenumfang der Werkzeugaufnahmewelle 48 ist in diesem Bereich ebenfalls mit einer entsprechenden Anzahl von Längsnuten 48' versehen, sodaß der Außenumfang der Werkzeugaufnahmewelle 48 und der Innenumfang des jeweiligen Kupplungselements 50, 52 in Umfangsrichtung in Formschluß miteinander stehen, jedoch in Axialrichtung relativ zueinander bewegbar sind. Hierdurch wird gewährleistet, daß die Rotation der Spindelwelle 3 über deren Rohrabschnitt 30 und die Kupplungselemente 50, 52 der Drehmitnahmekupplung 5 auf die Werkzeugaufnahmewelle 48 und von dieser auf das Spannfutter 42 und das Rotationswerkzeug 44 übertragen wird, während gleichzeitig eine Axialbewegung der Werkzeugaufnahmewelle 48 relativ zur Spindelwelle 3 ermöglicht ist. Die Kupplungselemente 50, 52 und die Werkzeugaufnahmewelle 48 können alternativ auch über einen Kraftschluß (zum Beispiel eine magnetische Mitnahme) aneinander gekoppelt sein.

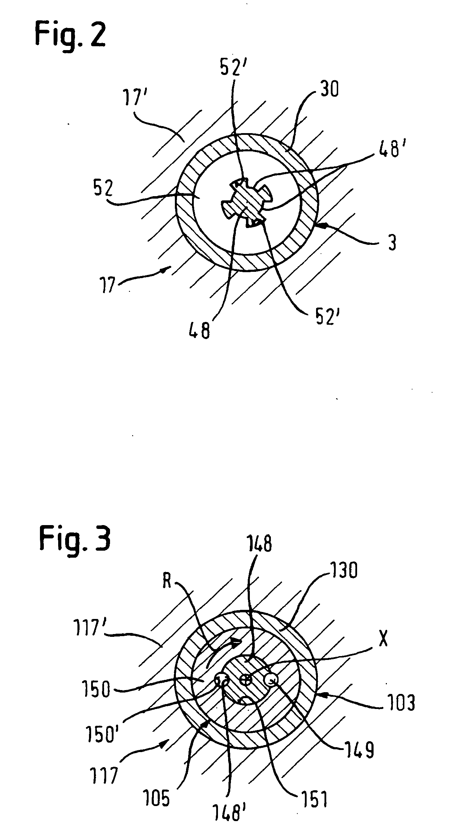

Fig. 2 zeigt in vergrößerter Darstellung einen Querschnittsausschnitt entlang der Linie II-II, wobei die Wellen-Naben-Verbindung zwischen der Werkzeugaufnahmewelle 48 und den Kupplungselementen 50, 52 als Vielzahnprofil mit den Längsnuten 48' und 52' ausgebildet ist. In dieser vergrößerten Darstellung ist deutlich die formschlüssige Wellen-Naben-Verbindung zwischen der Werkzeugaufnahmewelle 48 und dem Kupplungselement 52 zu erkennen.

Eine alternative Wellen-Naben-Verbindung ist in Fig. 3 dargestellt. Diese Figur ist ein Querschnitt entlang der Linie III-III in Fig. 1. Die Bezugszeichen sind dabei gegenüber den Bezugszeichen des Ausführungsbeispiels der Fig. 1 und 2 um den Wert 100 erhöht.

Der Rohrabschnitt 130 der Spindelwelle 103 ist wie im ersten Ausführungsbeispiel im zylindrischen Abschnitt 117' des Flanschabschnitts 117 mittels eines aerostatischen Lagers rotatorisch gelagert. Radial innerhalb des Rohrabschnitts 130 mit diesem drehfest verbunden ist ein Kupplungselement 150 vorgesehen, welches eine axiale Durchgangsbohrung 151 aufweist. In der Wand dieser axialen Durchgangsbohrung 151 sind um den Umfangswinkel von 180° zueinander versetzt zwei teilkugelförmige Kugelpfannen 148' vorgesehen, in welche jeweils eine Kugel 149 eingelegt ist. Passend dazu ist die Werkzeugaufnahmewelle 148 an ihrem Außenumfang, um einen Umfangswinkel von 180° zueinander versetzt, mit zwei achsparallelen Längsnuten 148' versehen, in welche jeweils eine der Kugeln 149 eingreift. Auf diese Weise ist zwischen dem Kupplungselement 150 und der Werkzeugaufnahmewelle 148 eine Formschlußkupplung in Rotationsrichtung R gebildet, wodurch die Werkzeugaufnahmewelle 148 gemeinsam mit dem Kupplungselement 150 und somit mit der Spindelwelle 103 rotieren kann. Zugleich kann die Werkzeugaufnahmewelle 148 aber in Längsrichtung, also in Richtung der Rotationsachse X, relativ zum Kupplungselement 150 verschoben werden, wobei die Kugeln 149 eine reibungsarme Kugellagerung für diese Axialverschiebung bilden.

Eine symmetrische Anordnung der Kugeln - es können auch mehr als zwei Kugeln über den Umfang verteilt vorgesehen sein - beugt dem Entstehen einer Unwucht bei der Rotation vor. Eine derartige Unwucht ist bei den angestrebten sehr hohen Drehzahlen zu vermeiden. Wird lediglich eine Kugel 149 als Mitnehmerelement zwischen dem Kupplungselement 150 und der Werkzeugaufnahmewelle 148 vorgesehen, so sind die Werkzeugaufnahmewelle 148 und das Kupplungselement 150 entsprechend auszuwuchten. Das zweite Kupplungselement ist vorzugsweise entsprechend dem ersten Kupplungselement 150 ausgestaltet.

Durch die rotatorische Kopplung der Werkzeugaufnahmewelle und der Spindelwelle bei gleichzeitiger axialer.Entkopplung dieser beiden Wellen kann der Spannfuttereinsatz mit dem Rotationswerkzeug zur Werkstückbearbeitung axial verschoben werden, ohne daß dazu die gesamte Spindel axial verschoben werden muß. Es werden lediglich die Werkzeugaufnahmewelle und der mit dieser verbundene Spannfuttereinsatz axial verschoben.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Hochdrehzahlspindel mit
- einem Spindelgehäuse (1);
- einer im Spindelgehäuse (1) mittels aerostatischer Lager um eine Drehachse (X) drehbar antreibbar gelagerten Spindelwelle (3) und
- einer mit der Spindelwelle (3) zur gemeinsamen Rotation gekoppelten Werkzeugaufnahme (4);
**dadurch gekennzeichnet,**
- **dass** die Spindelwelle (3) eine axiale Durchgangsbohrung (31) aufweist, durch die eine mit der Werkzeugaufnahme (4) drehfest und axialfest verbundene Werkzeugaufnahmewelle (48) hindurchgeführt ist;
- **dass** die Werkzeugaufnahmewelle (48) mit der Spindelwelle (3) drehfest, aber relativ zu dieser axial verschiebbar gekoppelt ist und
- **dass** ein auf die Werkzeugaufnahmewelle (48) wirkender Translationsantrieb (6) zum axialen Verschieben der Werkzeugaufnahmewelle (48) und der Werkzeugaufnahme(4) vorgesehen ist.

2. Hochdrehzahlspindel nach Anspruch 1,
**dadurch gekennzeichnet,**
**dass** zur drehfesten Koppelung der Werkzeugaufnahmewelle (48) mit der Spindelwelle (3) eine Drehmitnahmekupplung (5) vorgesehen ist, die mit der Spindelwelle (3) verbunden ist und die eine Axialbohrung aufweist, durch welche die Werkzeugaufnahmewelle (48) hindurchgeführt ist, wobei die Werkzeugaufnahmewelle (48) im Bereich der Drehmitnahmekupplung (5) mit einer Längsprofilierung versehen ist, in die ein entsprechend ausgestalteter Profilkörper der Drehmitnahmekupplung (5) eingreift.

3. Hochdrehzahlspindel nach Anspruch 2
**dadurch gekennzeichnet,**
**dass** der Profilkörper der Drehmitnahmekupplung (105) von zumindest einer Kugel (149) gebildet ist und dass die Längsprofilierung der Werkzeugaufnahmewelle (148) von zumindest einer achsparallelen Längsnut (148') gebildet ist, in welche zumindest eine Kugel (149) eingreift, die in einer Kugelpfanne (150') gelagert ist, die in der Innenumfangswand (151) der Drehmitnahmekupplung (105) ausgebildet ist.

4. Hochdrehzahlspindel nach Anspruch 2
**dadurch gekennzeichnet,**
**dass** der Profilkörper der Drehmitnahmekupplung (5) und die Längsprofilierung der Werkzeugaufnahmewelle (48) eine Wellen-Naben-Verbindung, insbesondere eine Vielzahnprofil-Verbindung, bilden.

5. Hochdrehzahlspindel nach einem der vorhergehenden Ansprüche,
**dadurch gekennzeichnet,**
**dass** der Translationsantrieb (6) von einem Linearantrieb gebildet ist, der über eine Axialkupplung (60) mit der Werkzeugaufnahmewelle (48) axial gekoppelt ist und der über ein ebenes, in Axialrichtung wirkendes Luftlager bezüglich der Werkzeugaufnahmewelle (48) drehentkoppelt ist.

6. Hochdrehzahlspindel nach Anspruch 5,
**dadurch gekennzeichnet,**
**dass** die Axialkupplung (60) zwischen dem Translationsantrieb (6) und der Werkzeugaufnahmewelle (48) einen Magneten aufweist, so dass die axiale Koppelung mittels Magnetkraft erfolgt.

## Claims

1. High-speed spindle comprising
- a spindle housing (1);
- a spindle shaft (3) mounted by means of aerostatic bearings in the spindle housing (1) so as to be settable in rotation about an axis of rotation (X) and
- a tool holder (4) coupled for joint rotation to the spindle shaft (3);
**characterized in**
- **that** the spindle shaft (3) has an axial throughbore (31), extending through which is a tool holder shaft (48) that is connected in a rotationally and axially fixed manner to the tool holder (4);
- **that** the tool holder shaft (48) is coupled to the spindle shaft (3) in a rotationally fixed manner but so as to be axially displaceable relative thereto and
- **that** a translational drive (6) that acts upon the tool holder shaft (48) is provided for axially displacing the tool holder shaft (48) and the tool holder (4).

2. High-speed spindle according to claim 1,
**characterized in**
**that** for the rotationally fixed coupling of the tool holder shaft (48) to the spindle shaft (3) a rotary driving coupling (5) is provided, which is connected to the spindle shaft (3) and which has an axial bore, through which the tool holder shaft (48) extends, wherein the tool holder shaft (48) in the region of the rotary driving coupling (5) is provided with longitudinal profiling, into which a correspondingly configured profile body of the rotary driving coupling (5) engages.

3. High-speed spindle according to claim 2,
**characterized in**
**that** the profile body of the rotary driving coupling (105) is formed by at least one ball (149) and that the longitudinal profiling of the tool holder shaft (148) is formed by at least one longitudinal groove (148') parallel to the axis, into which at least one ball (149) engages, which is mounted in a ball socket (150') formed in the inner peripheral wall (151) of the rotary driving coupling (105).

4. High-speed spindle according to claim 2,
**characterized in that** the profile body of the rotary driving coupling (5) and the longitudinal profiling of the tool holder shaft (48) form a shaft-hub connection, in particular a multi-spline connection.

5. High-speed spindle according to one of the preceding claims,
**characterized in**
**that** the translational drive (6) is formed by a linear-motion drive, which is axially coupled by an axial coupling (60) to the tool holder shaft (48) and which is rotationally uncoupled in relation to the tool holder shaft (48) by means of a flat air bearing acting in axial direction.

6. High-speed spindle according to claim 5,
**characterized in**
**that** the axial coupling (60) between the translational drive (6) and the tool holder shaft (48) comprises a magnet, so that the axial coupling is effected by means of magnetic force.

## Revendications

1. Broche à haute vitesse de rotation, comprenant
- un boîtier de broche (1) ;
- un arbre de broche (3) monté dans le boîtier de broche (1) au moyen de paliers aérostatiques et susceptible d'être entraîné en rotation autour d'un axe de rotation (X), et
- un récepteur à outil (4) accouplé à l'arbre de broche (3) en vue d'une rotation commune ;
**caractérisée en ce que**
- l'arbre de broche (3) comporte un perçage traversant axial (31) à travers lequel est passé un arbre récepteur d'outil (48) relié solidairement en rotation et solidairement en sens axial avec le récepteur à outil (4) ;
- l'arbre récepteur d'outil (48) est relié solidairement en rotation à l'arbre de broche (3), mais avec possibilité de translation axiale par rapport à celui-ci ; et
- il est prévu un entraînement de translation agissant sur l'arbre récepteur d'outil (48) pour la translation axiale de l'arbre récepteur d'outil (48) et du récepteur à outil (4).

2. Broche à haute vitesse de rotation selon la revendication 1,
**caractérisée en ce que**, pour l'accouplement solidaire en rotation de l'arbre récepteur d'outil (48) avec l'arbre de broche (3) il est prévu un accouplement d'entraînement rotatif (5), qui est relié à l'arbre de broche (3) et qui présente un perçage axial à travers lequel est passé l'arbre récepteur d'outil (48), dans laquelle l'arbre récepteur d'outil (48) est doté, dans la région de l'accouplement d'entraînement rotatif (5), d'un profilage longitudinal dans lequel s'engage un corps profilé, de l'accouplement d'entraînement rotatif (5), conçu en correspondance.

3. Broche à haute vitesse de rotation selon la revendication 2,
**caractérisée en ce que** le corps profilé de l'accouplement d'entraînement rotatif (105) est formé par au moins une bille (149), et **en ce que** le profilage longitudinal de l'arbre récepteur d'outil (148) est formé par au moins une rainure longitudinale (148') parallèle à l'axe, dans laquelle s'engage au moins une bille (149), laquelle est logée dans un coussinet de bille (150') qui est réalisé dans la paroi périphérique intérieure (151) de l'accouplement d'entraînement rotatif (105).

4. Broche à haute vitesse de rotation selon la revendication 2,
**caractérisée en ce que** le corps profilé de l'accouplement d'entraînement rotatif (5) et le profilage longitudinal de l'arbre récepteur d'outil (48) forment une liaison de type arbre/moyeu, en particulier une liaison avec profil à dents multiples.

5. Broche à haute vitesse de rotation selon l'une des revendications précédentes,
**caractérisée en ce que** l'entraînement de translation (6) est formé par un entraînement linéaire, qui est accouplé axialement avec l'arbre récepteur d'outil (48) via un accouplement axial (60) et qui est découplé vis-à-vis de la rotation par rapport à l'arbre récepteur d'outil (48) via un palier à air agissant en direction axiale.

6. Broche ou de vitesse de rotation selon la revendication 5,
**caractérisée en ce que** l'accouplement axial (60) entre l'entraînement de translation (6) et l'arbre récepteur d'outil (48) comprend un aimant, de sorte que l'accouplement axial a lieu au moyen d'une force magnétique.
